# EUROPEAN PATENT SPECIFICATION

(11) **EP 2 117 838 B1**
(45) Date of publication and mention of the grant of the patent: **21.12.2016**
(21) Application number: 08709123.7
(22) Date of filing: 20.02.2008
(51) Int. Cl.: B32B 27/32, B32B 27/08, B32B 27/10

(54) **FILM AND METHOD FOR PRODUCING SAID FILM**
FOLIE UND VERFAHREN ZUR HERSTELLUNG DER FOLIE
FILM ET PROCÉDÉ DE PRODUCTION DUDIT FILM

(30) Priority: 20.02.2007 IT UD20070039
(43) Date of publication of application: 18.11.2009
(73) Proprietor: Cartotecnica Veneta Spa, 35010 San Pietro In Gu' (IT)
(72) Inventor: MENEGHETTI, Francesco, 36050 Bressanvido (VI) (IT); GRAZIOLI, Mauro, 35010 San Pietro in Gu (PD) (IT)
(74) Representative: Petraz, Gilberto Luigi
(86) International application number: PCT/EP2008/052041
(87) International publication number: WO 2008/101946

(56) References cited:
- EP-A- 1 388 415
- EP-A- 1 661 693
- EP-A1- 1 342 566
- DE-A1- 10 042 332
- US-A1- 2004 028 928
- US-A1- 2006 046 006
- US-B1- 6 551 653

## Description

### FIELD OF THE INVENTION

The present invention concerns a two films structure, or "duplex", with high barrier properties against oxygen, water vapor, aromas and light, in particular, but not only, for use as packaging in the food and pharmaceutical sector.

### BACKGROUND OF THE INVENTION

It is known that food and pharmaceutical products must be protected from the external environment by means of a packaging, preferably made with polymer-based films, which are light, resistant and economical.

The films used must act as a barrier between the product and the external environment, reducing to a minimum the permeability of oxygen, aromas, water vapor and the passage of light, which are the main factors that influence the rate of degradation of the organoleptic properties of the packaged product. In particular, permeability to oxygen must be lower than 5 cm³/m² a day at 23 °C and at 0% relative humidity, ASTM D 3985-81 method, permeability to water vapor lower than 1 g/m² a day at 38 °C at 90% relative humidity, ASTM F 1249 method, and optic density higher than 2.

The films used for packaging food and pharmaceutical products must also have good welding properties in order to guarantee a hermetic closure of the package, that is, within determinate temperature intervals, their air-tightness after welding must be higher than a desired value.

Most known packaging films, or packages, with high barrier properties are formed by three layers, known as "triplex" structure, of different materials, which are coupled cold by means of adhesives, or laminating method, or hot, by pouring melted plastic material, extrusion coating process. Typically a triplex structure is formed by:
- a layer with welding properties, such as polyethylene with a thickness comprised between 20 micron and 100 micron;
- a layer with barrier properties, such as an aluminum sheet with a thickness comprised between 6 micron and 12 micron or of metallized polyester with a thickness comprised between 8 micron and 9 micron; and
- a layer able to be printed, such as polypropylene, with a thickness comprised between 15 micron and 25 micron, polyester with a thickness comprised between 8 micron and 19 micron, polyamide with a thickness comprised between 10 micron and 20 micron or paper, with a basic weight between 30 g/m² and 80 g/m².

For example, the film with a polyethylene layer, aluminum layer and polyester layer has permeability to oxygen comprised between 0.01 cm³/m² and 0.1 cm³/m² a day at 23 °C and at 0% relative humidity, permeability to water vapor comprised between 0.01 g/m² and 0.1 g/m² a day at 38 °C at 90% relative humidity and optic density higher than 4.

Instead, the solution with polyethylene film, metallized polyester film and polyester film has permeability to oxygen comprised between 0.5 cm³/m² and 2 cm³/m² a day at 23 °C and at 0% relative humidity, permeability to water vapor comprised between 0.3 g/m² and 1 g/m² a day at 38 °C at 90% relative humidity and optic density higher than 2.5.

A further known triplex solution is formed by a polyethylene film, a metallized polypropylene film coated with protective varnish with an ethylene vinyl alcohol (EVOH) base and a polyester film. This triplex package has permeability to oxygen comprised between 0.2 cm³/m² and 1.0 cm³/m² a day at 23 °C and at 0% relative humidity, permeability to water vapor comprised between 0.2 g/m² and 0.6 g/m² a day at 38 °C at 90% relative humidity and optic density higher than 2.5.

In the field of packaging films the need is felt for simplifying the structure of such films. For this purpose, a number of studies and experiments have been carried out in order to produce a "duplex" structure, that is, to couple one layer, with a thickness comprised between 20 micron and 100 micron, of a material with both welding properties and barrier properties, with a layer of material able to be printed.

A known example of such film with duplex film structure is formed by a layer of metallized polypropylene and by a layer of printed polypropylene. This duplex film has permeability to oxygen comprised between 30 cm³/m² and 100 cm³/m² a day at 23 °C and at 0% relative humidity, permeability to water vapor comprised between 0.4 1 g/m² and 1 g/m² a day at 38 °C at 90% relative humidity and optic density higher than 2.5. This solution, apart from the fact that it does not offer good barrier properties, is not able to guarantee good sealing properties of the welds during and after the packing of the food product. It is in fact known that the welding properties of polypropylene films are limited, or in any case far inferior to polyethylene films. It is a fact that the limits of the welding properties limit the use of polypropylene films to non-critical food packaging, from the point of view of the seal of the package, such as snacks, crisps and biscuits.

Another example of a known film with a duplex film structure is formed by a layer of metallized polyethylene and by a layer of printed polyester. In this duplex film, the layer of metallized polyethylene has an excellent weldability; however, overall, the same layer of metallized polyethylene determines a decline in the barrier properties. In fact, in this case, permeability to oxygen is comprised between 200 cm³/m² and 800 cm³/m² a day at 23 °C and at 0% relative humidity, permeability to water vapor comprised between 2 g/m² and 5 g/m² a day at 38 °C at 90% relative humidity and optic density is higher than 2.5.

A further known solution provides to produce a polyethylene film coupled with a polyethylene film metallized on one side and printed on the other.

Typically, the metallized side is coupled towards the polyethylene film and the print remains external. This solution, as well as having a poor aesthetic result, can introduce risks of contamination of the food product due to the surfacing of additives contained in the printing inks. Usually, a preferred solution is to protect the print with a suitable varnish. However, this further treatment influences the simplicity of production and the costs of the final packaging in a negative manner. In reality, the market prefers packages with the print and the metallization disposed internally and sealed between two films.

A further known solution provides to produce a polyethylene film coupled with a polyester film coated with barrier varnishes with a polyvinylidene chloride (PVDC) base. In this case, permeability to oxygen is comprised between 6.0 cm³/m² and 12.0 cm³/m² a day at 23 °C and at 0% relative humidity, permeability to water vapor is comprised between 2.0 g/m² and 5.0 g/m² a day at 38 °C at 90% relative humidity. However, given the high transparency properties of all the materials that form the package, the resulting barrier to light is very poor.

Another known solution provides to produce a multi-layered polyethylene film containing polymers with a barrier function, typically EVOH, coupled with a polyester film. In this case, permeability to oxygen is comprised between 1.0 cm³/m² and 5.0 cm³/m² a day at 23 °C and at 0% relative humidity, permeability to water vapor is comprised between 2.0 g/m² and 5.0 g/m² a day at 38 °C at 90% relative humidity. However, given the high transparency properties of all the materials that form the package, the resulting barrier to light is very poor.

Laminate or layered film products are further known in the art, for example from EP-A-1.388.415, EP-A-1.203.656, EP-A-1.342.566, EP-A-1.661.693, EP-A-1.769.908, US-A-2004/028928 and US-A-5.912.070.

EP-A-1.388.415 discloses a film structure having at least two layers comprising a cyclic olefin copolymer (COC) and a polyolefin (LLDPE, VLDPE or polypropylene) or an ethylene copolymer (EVA, EBA, EAA) and at least a further layer containing only a polyolefin, that can be generically coated with aluminum.

EP-A-1.203.656 discloses a multi-layered film and laminated products having at least one alicyclic polymer layer, for example a cycloolefin polymer (COC), at least one thermoplastic resin layer (polyethylene and polypropylene are preferred) and at least one layer of a resin composition comprising an alicyclic polymer and a thermoplastic resin (LLDPE may be used).

EP-A-1.342.566 discloses a laminate for packaging material with a complex structure which comprises a paper layer, a polycycloolefin copolymer containing layer that is provided on the outside of the paper layer, an inner barrier layer (for example based on aluminum layer) and a further inner polyethylene layer. A mono or multilayer of a thermoplastic resin (polyolefin, nylon, polyesther, polyvinyl chloride) is provided between the paper layer and the polycycloolefin copolymer-contaning layer. The aluminum layer is deposited on the surface of the thermoplastic resin layer.

EP-A-1.661.693 discloses a film having a multi-layer structure with at least two outer cyclic olefin copolymer (COC) layers and an intermediate layer of a polyolefin (polyethylene and polypropylene).

EP-A-1.769.908 is a packaging system with a triplex structure having a thermostable film (PET, OPA, Aluminum foil, EVOH, OPP), suited to be printed, as an outer layer, an inner layer with thermoplastic properties that render it thermosealable and an intermediate layer acting as a barrier, for example an aluminum sheet 9 micron.

Moreover, US-A-2004/028928 discloses a biaxially oriented polyester film comprising at least one layer containing a cyclic olefin copolymer (COC).

Finally, US-A-5.912.070 discloses a laminate film with a structure comprising one or more layers of a thermoplastic polyester resin, one or more layers of a resin based on cycloolefin and one or more interposed layers of an adhesive, that can be used as a packaging material, coupled with paper, an aluminum foil and a polyethylene film.

From the above it is evident that there is considerable difficulty in achieving a film which can be used in a duplex film structure, combining at the same time high barrier properties against gas, aromas, water vapor and light, high welding properties, high adhesion of the layers that form it, that is aesthetically pleasing, economic, recyclable and simple to produce.

Purpose of the present invention is to achieve a film with optimal welding properties and that, when metallized and then coupled with a printable film of the known type, allows to produce a film with a duplex type structure with high barrier properties against oxygen, water vapor, aromas and light.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, a structure according to the present invention is a two films structure, or "duplex", for producing a packaging product, in particular, but not only, for use as packaging in the food and pharmaceutical sector, said two films structure, or "duplex", comprising a first film formed by a plurality of layers, at least an intermediate metallic coating layer deposited on an outer of said layers, and a second film, in a material able to be printed and disposed on said intermediate metallic coating layer, said one or more layers which defines said first film and said second film forming together said two films structure, or "duplex".

Each of said one or more layers comprises a cyclic olefin copolymer (COC) and said metallic coating layer has a thickness comprised between about 100 angstrom and 400 angstrom.

Each of said plurality of layers further comprises a polyolefin.

The choice of the cyclic olefin copolymer (COC) and of the preferred polyolefin according to the invention allows to obtain a good control of the mechanical and chemical properties achieved by the two basic components, in particular a good balance between the typical rigidity of the cyclic olefin copolymer (COC) and the required high welding properties, high adhesion of the layers, high tearing properties and good machine-workability properties.

The polyolefin is polyethylene

The cyclic olefin copolymer is obtained by the copolymerization of ethylene and norbornene.

The first film is a multilayer. A first of said layers comprises a first mix comprising linear low-density polyethylene (LLDPE) and said cyclic olefin copolymer (COC).

The first layer is the outer of the three layers, on which the metallic coating layer is deposited.

A second of said layers comprises a second mix comprising low-density polyethylene (LDPE) and said cyclic olefin copolymer (COC).

A third of said layers comprises a third mix comprising linear low-density polyethylene (LLDPE), said cyclic olefin copolymer (COC), components with anti-blocking functions and one or more process additives.

The second layer is interposed between the first and the third layer.

The third layer is the one that, in use, is on the inside of the packaging, in contact with the packaged product.

The first film according to the present invention has excellent weldability properties and is suitable for the production of a packaging film with duplex film structure.

Prior to the realization of the intermediate metallic coating layer by metallization, the first film is subjected to a corona treatment and to a following plasma treatment, in order to prepare it for the metallization.

Said treatments are effectively obtainable and with a long-lasting duration, in particular thanks to the fact that the cyclic olefin copolymer (COC) is used in the mixes forming said layers defining said first film.

The synergistic effect of said treatments and of the use of cyclic olefin copolymer (COC) allows to perform a high effective metallization operation and to obtain a very thin metallic coating layer, that has a good stability and duration, and, at the same time, high barrier properties.

Thanks to the choice of the three mixes as above, the first film according to the present invention can be effectively treated and subsequently metallized with a very thin metal coating, with a thickness comprised between 100 angstrom and 400 angstrom, obtained by depositing metallic vapors on the film.

In this way, by using a very thin metallic layer, it is possible both to reduce the amount of metal used by 300 - 400 times with respect to the state of the art, and also to obtain a metallized film with high barrier properties against oxygen and water vapor.

The thin metallic coating thus obtained has a thickness that is completely negligible, from the point of view of size, with respect to the thickness of the film itself and further films that are coupled afterwards, permitting to obtain a film with a duplex film structure.

Once metallized with the layer of metallic coating and further coupled with a second film, the film according to the invention allows to achieve a duplex film structure film with high barrier properties, against both oxygen and water vapor.

As the material for the metallic coating it is possible to use aluminum, aluminum oxide, silica oxide, preferably aluminum.

The first film according to the present invention can be effectively coupled using a coupling layer, for example by cold lamination, or heat coupling by means of extrusion coating, to the second film of printable material, achieving a duplex film structure.

Furthermore, the first film according to the present invention allows to achieve a safe and non-contaminating duplex film structure for the product to be packaged, both food and pharmaceutical, and with a good aesthetic result.

Another advantage of the present invention is the reduced cost of the raw materials, due to the use of optimized compositions of the cyclic olefin copolymer, itself expensive, in the above mixes.

Further advantages of the present invention are:
- high barrier against light;
- good duration of surface tension values, in the range of about 48 Dynes/cm up to 5 - 6 months after production date, with the consequent advantage of promoting an excellent adhesion to other plastic films and the possibility of maintaining and managing the stocks of film kept in the warehouse for the coupling step;
- high sliding properties, with values lower than 0.25, and good machine-workability;
- high rigidity;
- high tearing properties, with preferential breaking direction, advantageously suitable in a package with pre-cutting that facilitates opening for the user;
- high chemical resistance.

The present invention further provides a method for producing a two films structure, or "duplex", in particular, but not only, for use as packaging in the food and pharmaceutical sector, said two films structure, or "duplex", comprising a first film formed by a plurality of layers, at least an intermediate metallic coating layer deposited on an outer of said layers, and a second film, in a material able to be printed and disposed on said intermediate metallic coating layer, said one or more layers which defines a first film and said second film forming together said two films structure, or "duplex".

The method according to the present invention comprises a first step in which an extrusion is performed of a plurality of mixes comprising a cyclic olefin copolymer (COC), in order to obtain said first film and a crown treatment is performed on at least the outer surface of said first film, a second step to metallize said film in order to obtain said metallic coating, that comprises the performance of a plasma treatment on said first film and a subsequent deposition of metallic vapors on said first film.

The thus obtained metallic coating layer has a thickness comprised between about 100 angstrom and 400 angstrom.

Each of said plurality of layers of the first film further comprises a polyolefin.

The polyolefin is polyethylene

The cyclic olefin copolymer is obtained by the copolymerization of ethylene and norbornene.

Said mixes comprise:
- a first mix comprising linear low-density polyethylene (LLDPE) and said cyclic olefin copolymer (COC);
- a second mix comprising low-density polyethylene (LDPE) and said cyclic olefin copolymer (COC); and
- a third mix comprising linear low-density polyethylene (LLDPE), said cyclic olefin copolymer (COC), components with anti-blocking functions and one or more process additives;
   in order to obtain at least a first of said layers, that is formed by said first mix, a second of said layers that is formed by said second mix and a third of said layers that is formed by said third mix.

The extrusion can be performed by a blow-film machine or by a cast machine.

Preferably, the plasma treatment is performed with an amperage comprised between about 4 ampere and 20 ampere, with a difference in potential comprised between about 200 volt and 500 volt, with a gas chosen from a group comprising argon, oxygen, nitrogen, carbon dioxide, ammonia and helium, and with a gas flow comprised between about 300 sccm and 1500 sccm.

Moreover, in order to obtain said two films structure, or "duplex", the method according to the present invention provides a third step in which, following the metallization of said second step, the coupling of the metallized film with the second film able to be printed is performed.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a schematic representation of a structure according to the present invention metallized and coupled with another film;
- fig. 2 is a block diagram of the method according to the present invention;
- fig. 3 is a diagram of an apparatus for the metallization of a first film according to the present invention;
- fig. 4 is the graph of a weldability test of the "hot tack profile" type for a first film according to the present invention, metallized and with a thickness of 16 micron, where the Y axis shows the resistance to traction of the film, expressed in Newton, and the X axis shows the temperature, expressed in degrees Celsius;
- fig. 5 is the graph of a weldability test of the "hot tack profile" type for a first film according to the present invention, metallized and with a thickness of 24 micron, where the Y axis shows the resistance to traction of the film, expressed in Newton, and the X axis shows the temperature, expressed in degrees Celsius;
- fig. 6 is the graph of a weldability test of the "seal profile" type for the film in fig. 5, where the Y axis shows the resistance to traction of the film in cold conditions, expressed in Newton, and the X axis shows the temperature, expressed in degrees Celsius;
- fig. 7 is the graph of a weldability test of the "seal profile" type for a first film according to the present invention with a thickness of 30 micron, where the Y axis shows the resistance to traction of the film in cold conditions, expressed in Newton, and the X axis shows the temperature, expressed in degrees Celsius; and
- fig. 8 is the graph of a weldability test of the "hot tack profile" type for the film in fig. 7, where the Y axis shows the resistance to traction of the film, expressed in Newton, and the X axis shows the temperature, expressed in degrees Celsius.

### DETAILED DESCRIPTION OF A PREFERENTIAL

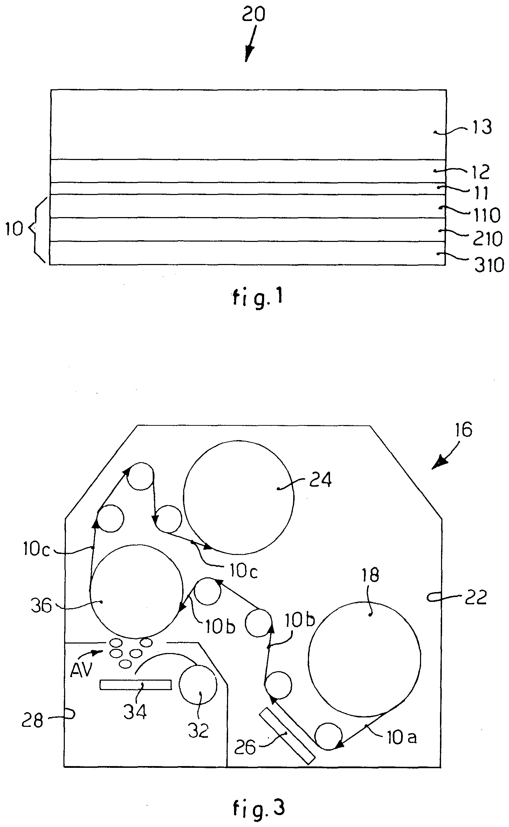

With reference to fig. 1, a method according to the present invention is able to achieve a multi-layer first film 10 by means of an amorphous polymeric resin belonging to the family of cyclic olefin copolymers and obtained from ethylene and norbornene.

The multi-layer first film 10 is subsequently able to be used in order to achieve a duplex film structure film 20 according to the invention, that is, able to be metallized with a layer 11 of metal of negligible size and coated, or coupled, with a second film 13 of printable material, such as polyester, polypropylene, paper or cardboard, or other materials suitable for the purpose.

The first film 10 is shown in fig. 1 with a metallic coating layer 11 and coupled, by means of a coupling layer 12, with the second film 13 of printable material, wherein the sizes of the layers and of the films, for the sake of convenience, are only indicative, since, for example, the metallic coating layer 11 is not, in reality, comparable in size with the thickness of the other layers.

Here and hereafter, duplex film structure shall be understood to mean a film structure formed by a film or layer of material that has both welding properties and barrier properties, in this case the multi-layer film 10 coated with the metallic coating 11, and by a film or layer of material able to be printed, the above-mentioned second film 13 of printable material.

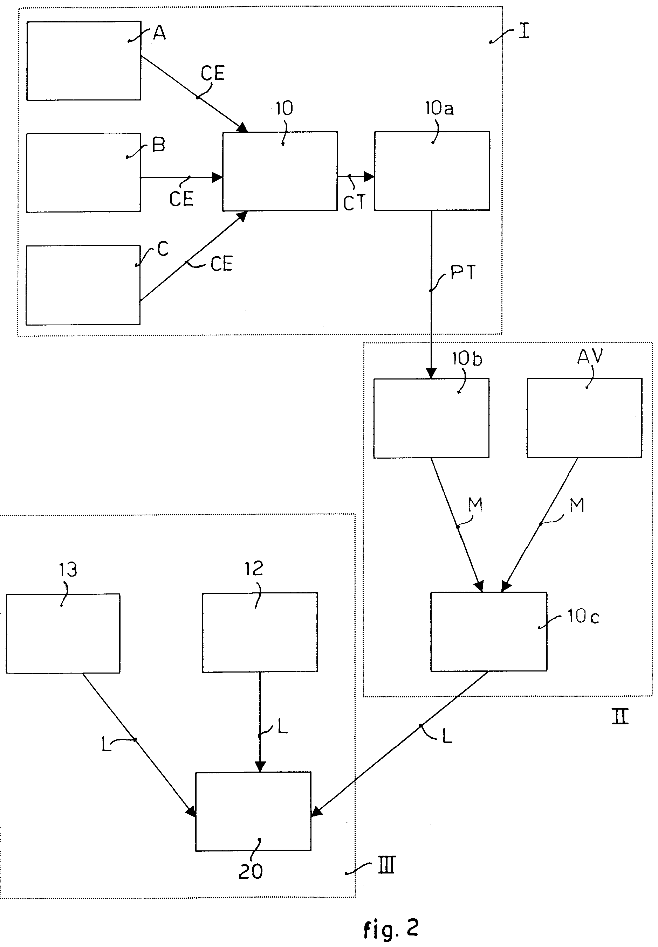

Fig. 2 schematically shows a step I, to obtain the multi-layer first film 10, followed by a step II of metallization with the metallic coating layer 11 and a step III of coupling with the second film 13 of printable material.

A first passage in the method according to the present invention provides to produce, by means of the known technique of extrusion, a multi-layer first film 10, in particular with three layers 110, 210, 310, in which each layer is formed by a relative mix of polymers, each with their own functions.

In particular, a first layer 110, formed by a first mix A, functions as an adhesive to the metallic coating layer 11 which, as will be described hereafter, is deposited on the film 10.

A second layer 210, formed by a second mix B, functions as a support, while a third layer 310, formed by a third mix C, has high weldability and workability properties.

Here and hereafter, if not otherwise specified, the percentages of composition are to be understood as expressed on the basis of weight.

The aforementioned layers 110, 210, 310 are based on a cyclic olefin copolymer (COC) and on a polyethylene.

The extrusion apparatus can be of the blow-film machine type or a cast machine can be used, depending on the polyolefin used.

The first mix A comprises a cyclic olefin copolymer (COC) as component A1, that is, an amorphous polymeric resin obtained from ethylene and norbornene, for example known by the commercial name of TOPAS, and, as component A2, linear low-density polyethylene (LLDPE), for example known by the commercial name of EXCEED 1327 CA.

According to the present invention, the composition of the component A1 in the first mix A is comprised in a range of percentage in weight between 50% and 100%, and the composition of the component A2 in the first mix A is comprised in a range of percentage in weight between 0% and 50%.

Preferably, the composition of the component A1 in the first mix A is comprised in a range of percentage in weight between 75% and 85%, and the composition of the component A2 in the first mix A is comprised in a range of percentage in weight between 15% and 25%.

A preferential form of embodiment of the invention provides that the composition of the component A1 in the first mix A is about 80%, and the composition of the component A2 in the first mix A is about 20%.

The second mix B comprises said cyclic olefin copolymer (COC) as component B1 and, as component B2, low-density polyethylene (LDPE) for example known by the commercial name LD150BW. According to the present invention, the composition of the component B1 in the second mix B is comprised in a range of percentage in weight between 20% and 50%, and the composition of the component B2 in the second mix B is comprised in a range of percentage in weight between 50% and 80%.

Preferably, the composition of the component B1 in the second mix B is comprised in a range of percentage in weight between 25% and 35%, and the composition of the component B2 in the second mix B is comprised in a range of percentage in weight between 65% and 75%.

A preferential form of embodiment of the invention provides that the composition of the component B1 in the second mix B is about 30%, and the composition of the component B2 in the second mix B is about 70%.

The third mix C comprises said cyclic olefin copolymer (COC) as component C1, and, as component C2, said linear low-density polyethylene (LLDPE) for example known by the commercial name EXCEED 1327 CA. According to the present invention, the composition of the component C1 in the third mix C is comprised in a range of percentage in weight between 50% and 100%, and the composition of the component C2 in the third mix C is comprised in a range of percentage in weight between 0% and 50%. As well as components C1 and C2, the third mix C contains anti-blocking particles, such as silica, and process additives, such as for example AIDAMF702, AB5 or others of known type.

Preferably, the composition of the component C1 in the third mix C is comprised in a range of percentage in weight between 75% and 85%, and the composition of the component C2 in the third mix C is comprised in a range of percentage in weight between 15% and 25%.

A preferential form of embodiment of the invention provides that the composition of the component C1 in the third mix C is about 80%, and the composition of the component C2 in the third mix C is about 20%.

In accordance with one form of embodiment of the present invention, the percentage in weight of the first mix A in the film according to the invention is comprised between 20% and 30%, the percentage in weight of the second mix B in the film according to the invention is comprised between 45% and 55% and the percentage in weight of the third mix C in the film according to the invention is comprised between 45% and 55%.

A preferential form of embodiment of the present invention provides that the percentage in weight of the first mix A in the film according to the invention is 25%, with composition of the component A1 of 80% and composition of the component A2 of 20%, that the percentage in weight of the second mix B in the film according to the invention is 40%, with composition of the component B1 of 30% and composition of the component B2 of 70%, and that the percentage in weight of the third mix C in the film according to the invention is 25%, with composition of the component C1 of 80% and composition of the component C2 of 20%.

An advantageous solution of the invention provides that the thickness of the first layer 110 with respect to the overall thickness of the film 10 is about 25%, the thickness of the second layer 210 is about 50% and the thickness of the third layer 310 is about 25%. For example, in the case of the first film 10 with a thickness of 24 micron, the layer 110 is about 6 micron thick, the layer 210 about 12 micron and the layer 310 about 6 micron.

In the event that the first film 10 is produced by means of co-extrusion, in particular by the co-extrusion and balloon filming technique or alternatively by the plane head extrusion technique, an extrusion apparatus of a known type is used, in which the components of each mix A, B and C are fed in the form of granules or pellets, advantageously pre-heated to 100 °C by means of a heat exchanger of a known type.

In the feed section of the extrusion apparatus, the temperature is such that the pellets heat and begin to melt. Advantageously, the temperature in the various zones of the extruder is optimized according to the mixes to be extruded.

In particular, the sector of the extruder where there is the first mix A is maintained at a substantially constant temperature advantageously comprised between about 215 and 225 °C, preferably about 220 °C, the sector of the extruder where there is the second mix B is maintained at a substantially constant temperature preferably comprised between about 190 and 200 °C, preferably about 195 °C, while the sector of the extruder where there is the third mix C is maintained at a substantially constant temperature preferably comprised between about 215 and 225 °C, preferably about 220 °C.

Preferably, furthermore, the head of the extruder is maintained at a constant temperature comprised between 190 and 200 °C, preferably about 195 °C.

At exit from the extruder, the first film 10 is obtained, formed by the three mixes A, B and C, as shown by the arrows CE in fig. 2.

The tube of first film 10 thus achieved has, in succession, the layer 110 formed by the first mix A, the layer 210 formed by the second mix B and the layer 310 formed by the third mix C; in particular, this last layer 310 is the one that is normally disposed inside the packaging or container, in contact with the packaged product.

The tube is flattened, cut and subjected to a crown treatment, arrow CT in fig. 2, of the known type. The crown treatment, in particular, is performed on the first layer 110. This first layer 110 is the one on which the metallic coating layer 11 is deposited, as mentioned afterwards.

The multi-layer first film 10 subjected to crown treatment, indicated for convenience with reference number 10a, is wound into two distinct reels.

Before undergoing the subsequent metallization, the film 10a has low barrier properties. In particular, permeability to oxygen through it is comprised between 3000 cm³/m² and 6000 cm³/m² a day at 23 °C, in conditions of 0% relative humidity, while permeability to water vapor through it is comprised between 5 g/m² and 14 g/m² a day at 38 °C, in conditions of 90% relative humidity.

The three-layer film 10a thus obtained after the corona treatment is subjected to a metallization operation, step II in fig. 2, in which a very thin layer of aluminum is deposited thereon, by means of a metallization apparatus 16 of a known type, in order to increase the barrier properties thereof (fig. 3).

In particular, the reel 18 of film 10a is loaded inside a chamber 22 of the metallization apparatus 16. The chamber 22 is closed hermetically, and a medium vacuum is produced therein, in the range of about 10⁻² mbar. The film 10a is unwound and wound onto another reel 24 and, during unwinding, is subjected to metallization.

In particular, during the metallization step, the unwound film 10a is carried, by means of drawing rollers, into proximity with a direct-current plasma treatment device 26 that performs said treatment on the film 10a, as shown by arrow PT in fig. 2.

The plasma treatment to which the film 10a is subjected is able to make the surface of the film 10a more receptive to the subsequent deposit of the metallic coating layer 11 of aluminum. In particular, this receptivity is determined by two effects of the plasma treatment.

A first effect is to carry out a surface cleaning of the film 10a, eliminating the contaminating substances with low molecular weight possibly present, such as process additives that have risen to the surface and/or water molecules adsorbed on the surface. Furthermore, the plasma treatment obtains a second effect of activating the surface of the film 10a, determining a homogeneous distribution of functional chemical groups, which are the cause of phenomena such as oxidation, polarization, formation of radicals and suchlike.

The optimal parameters for performing the plasma treatment according to the present invention will now be given. The plasma treatment apparatus is of the magnetron cathode type and works on direct current. The amperage of the plasma treatment is comprised between about 4 ampere and 20 ampere, the difference in potential is comprised between about 200 volt and 550 volt, the gasses used are chosen from a group comprising argon, oxygen, nitrogen, carbon dioxide, ammonia and helium, while the flux of gas is comprised between about 300 sccm and 1500 sccm (standard centimeter cube second).

According to one form of execution of the present invention, the optimal amperage of the plasma treatment is comprised between about 10 ampere and 14 ampere and the optimal mix of gasses consists of argon, about 1000 sccm, and oxygen, about 500 sccm.

Completely similar results can be obtained by using a plasma treatment apparatus that works on alternating current.

Thanks to the use of cycloolefin copolymer COC in the first film 10, the effect of said treatments is stable and has a long duration and high effectiveness, thus permitting the optimal performance of the metallization.

In a suitable chamber 28 in a state of high vacuum, with a pressure in the range of about 10-4 mbar, there is a sublimation step of the aluminum, so as to produce aluminum vapors, indicated with reference AV in figs. 2 and 3, which develop upwards. In particular, the sublimation of the aluminum occurs through heat exchange between a wound thread of aluminum 32 and one or more incandescent ceramic crucibles 34, also called evaporator boats, at a temperature of about 1500 °C.

The film subjected to plasma treatment, indicated for convenience by the reference number 10b in fig. 2, is transported, by means of a cooled process roller 36, to a zone of the medium-vacuum chamber reached by the aluminum vapors, which are deposited on both sides of the film 10b, as shown by arrow M in fig. 2. The film 10 thus metallized, indicated by the reference number 10c in figs. 2 and 3, is wound onto the reel 24.

At the end of the metallization, air is injected into the metallization apparatus 16, in order to restore ambient temperature and pressure, and the reel 24 is then discharged with the metallized film 10c.

The thickness of the metallic coating layer 11 of aluminum obtained is comprised between about 100 angstrom and 400 angstrom, with a basic weight of about 0.02 g/m² and a purity of aluminum comprised between about 99.50 and 99.95%.

This thickness is completely negligible, from the point of view of size, with respect to the thickness of the multi-layer film 10 and of other films coupled afterwards.

At the same time, the metallic coating layer 11 permits that the film 10c thus metallized acquires high barrier properties both against oxygen and against water vapor.

In fact, permeability to oxygen of the film 10c is comprised between about 10 cm³/m² and 20 cm³/m² a day, at 23 °C and with 0% relative humidity, while permeability to water vapor is comprised between about 0.08 g/m² and 0.15 g/m² a day at 38 °C and with 90% relative humidity. The increase in barrier properties is evident from the comparison with the barrier data reported above for the film not yet metallized.

High barrier property against light is also acquired when the film is subjected to metallization.

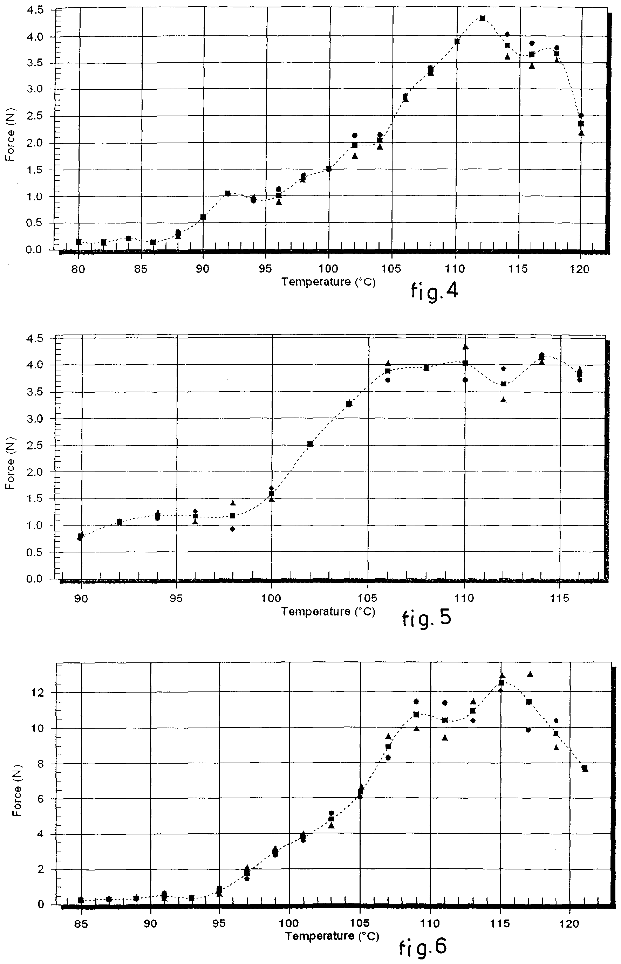

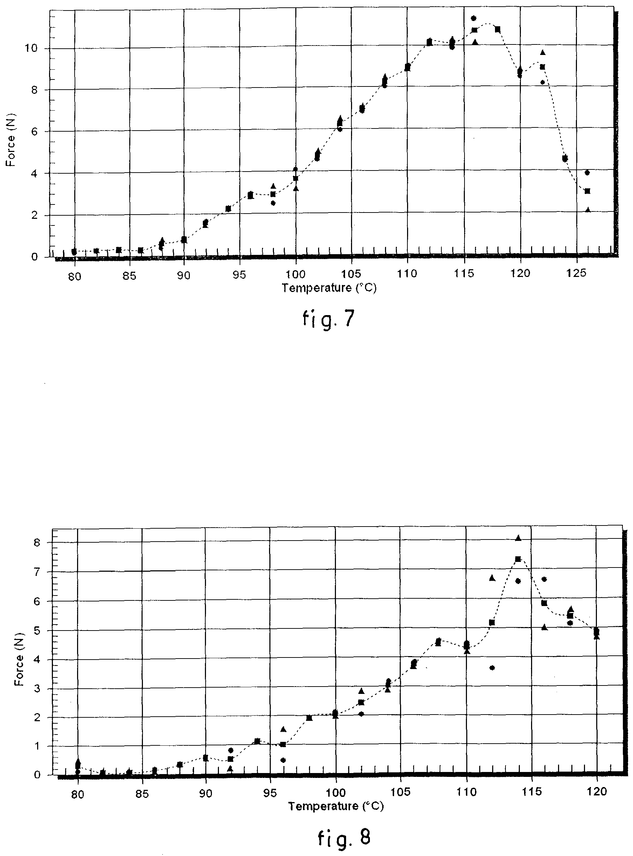

Figs. 4, 5, 6, 7 and 8 show the graphs of the weldability tests for the various types of metallized films 10c. In particular, the hot tack profile in figs. 4, 5 and 8 is achieved on a sealing surface of 50 mm by 20 mm, tearing speed 10 mm/sec, pressure 0.200 N/mm², dwell time 1 second and zero cooling time. On the other hand, the seal profile in figs. 6 and 7 is achieved on a sealing surface of 50 by 20 mm, tearing speed 10 mm/sec, pressure 0.200 N/mm², dwell time 1 second and cooling time 10 seconds. As can clearly be seen from figs. 4, 5, 6, 7 and 8, the metallized film 10c has optimal welding characteristics.

The metallized film 10c thus made can be coupled, according to the needs of the packaging to be produced, with the second film 13 of printable material, by means of a suitable coupling layer 12.

Because the metallic coating layer 11 has a thickness that is completely negligible, from the point of view of size, with respect to the thickness of the multi-layer film 10 and of the film 13, the thus obtained structure can be regarded as a duplex film structure.

In particular, according to a first form of embodiment of the invention, the metallized film 10c is subjected to a laminating operation in which, by means of a coupling layer 12 in the form of a suitable adhesive, which acts as a coupling layer, it is coupled to another printable film 13, of a known type, as shown by the arrows L in fig. 2.

In this operation, two reels, one with the metallized film 10c and one with the printable film 13, are loaded onto a laminating apparatus. The films of the two reels are unwound and wound one over the other, interposing the coupling layer 12 in the form of a suitable adhesive, by spreading it on one of the two films.

Typically used adhesives are bi-component and mono-component polyurethane adhesives, both with solvent and without solvent, or water-based acrylic adhesives or water-based vinyl adhesives.

The spread adhesive is left to dry, for the evaporation of the possible solvent and the two films are coupled with one another through pressure, achieving a film 20 formed by the metallized film 10c and by the printable film 13. Finally, the film 20 is discharged from the laminating apparatus.

The materials used as film 13 to be coupled are, for example, a polyester such as polyethylene terephthalate (PET), with a thickness comprised between about 8 micron and 36 micron, or bi-axially oriented polypropylene (BOPP), with a thickness comprised between about 15 micron and 50 micron, or paper with a basic weight comprised between about 30 g/m² and 120 g/m².

The film 20 thus made has a duplex type structure with, in succession, the printable coupling material 13, intended to come into contact with the external environment, the coupling layer 12 in the form of a suitable adhesive, the metallic coating layer 11 of aluminum and the multi-layer film 10 formed by the mixes A, B, and C.

According to the final application requirements of the film 20, the coupled material varies, in turn determining the barrier properties of the final film.

In the case of PET, permeability to oxygen is comprised between about 1 cm³/m² and 3.0 cm³/m² a day, at 23 °C and with 0% relative humidity, while permeability to water vapor is comprised between about 0.06 g/m² and 0.15 g/m² a day at 38 °C and with 90% relative humidity

In the case of BOPP, permeability to oxygen is comprised between about 2.0 cm³/m² and 4.0 cm³/m² a day, at 23 °C and with 0% relative humidity, while permeability to water vapor is comprised between about 0.05 g/m² and 0.10 g/m² a day at 38 °C and with 90% relative humidity.

In the case of paper, permeability to oxygen is comprised between about 3.0 cm³/m² and 6.0 cm³/m² a day, at 23 °C and with 0% relative humidity, while permeability to water vapor is comprised between about 0.15 g/m² and 0.30 g/m² a day at 38 °C and with 90% relative humidity.

In accordance with a second form of embodiment of the invention, the metallized film 10c is subjected to a coupling operation in extrusion coating (arrows L in fig. 2) instead of the cold lamination operation. In this way, the metallized film 10c is coupled with the film 13 of printable material by means of a coupling layer 12 consisting of a hot cast of a polymeric material or a combination of several polymeric materials originating from different extruders, which converge into a single cast in the extrusion head. The polymeric materials used in the cast are typically linear low-density polyethylene (LLDPE), modified polyethylene, polypropylene, ethylene vinyl alcohol (EVOH), ethylene vinyl acetate (EVA), OPA, cyclic olefin copolymer (COC).

In this second operation, two reels, one with the metallized film 10 and one with the printable film 13, are loaded onto an extrusion coating apparatus. The films of the two reels are unwound and wound one over the other, and, on one of the sides of the metallized film 10, a cast of the melted material or materials as coupling layer 12 as described above is performed.

It is clear that, although in fig. 1 the coupling layer 12 is represented as a single layer, according to necessity it is possible to produce the layer 12 as a multi-layer type, by co-extrusion, that is, a polymeric cast formed of different layers.

Finally, by applying pressure, the two films are coupled with one another.

A duplex film structure film 20 is obtained, formed by the second film 13 of printable material, intended to come into contact with the external environment, a coupling layer 12 of cast polymeric material, a very thin metallic coating layer 11 and the first film 10 defined by the three layers 110, 210, 310 based respectively on the three mixes A, B, and C.

Finally, the film 20 is wound onto a single reel and discharged from the extrusion coating apparatus.

The materials to be coupled used as second film 13 are, for example, a polyester such as polyethylene terephthalate (PET), with a thickness comprised between about 8 micron and 36 micron, or bi-axially oriented polypropylene (BOPP), with a thickness comprised between about 15 micron and 50 micron, or paper with a basic weight comprised between about 30 g/m² and 120 g/m², or cardboard with a basic weight comprised between about 150 g/m² and 500 g/m².

According to the final application requirements of the film 20, the coupled second film 13 varies, which in turn determines the barrier properties of the final film.

In the case of PET, permeability to oxygen is comprised between about 2.0 cm³/m² and 5.0 cm³/m² a day, at 23 °C and with 0% relative humidity, while permeability to water vapor is comprised between about 0.06 g/m² and 0.10 g/m² a day at 38 °C and with 90% relative humidity.

In the case of BOPP, permeability to oxygen is comprised between about 3.0 cm³/m² and 6.0 cm³/m² a day, at 23 °C and with 0% relative humidity, while permeability to water vapor is comprised between about 0.05 g/m² and 0.10 g/m² a day at 38 °C and with 90% relative humidity.

In the case of paper, permeability to oxygen is comprised between about 3.0 cm³/m² and 8.0 cm³/m² a day, at 23 °C and with 0% relative humidity, while permeability to water vapor is comprised between about 0.15 g/m² and 0.30 g/m² a day at 38 °C and with 90% relative humidity.

Finally, in the case of cardboard, permeability to oxygen is comprised between about 0.5 cm³/m² and 2.0 cm³/m² a day, at 23 °C and with 0% relative humidity, while permeability to water vapor is comprised between about 0.05 g/m² and 0.10 g/m² a day at 38 °C and with 90% relative humidity.

It is clear that modifications and/or additions of parts and/or steps may be made to the film and method for producing said film 10 as described heretofore, without departing from the field and scope of the present invention.

It is also clear that, although the present invention has been described with reference to some specific examples, a person of skill in the art shall certainly be able to achieve many other equivalent forms of film and of method for producing said film, having the characteristics as set forth in the claims and hence all coming within the field of protection defined thereby.

## Claims

1. Two films structure, or "duplex", for producing a packaging product, comprising a first film (10) formed by a plurality of layers (110, 210, 310), at least an intermediate metallic coating layer (11) deposited on an outer of said layers (110, 210, 310) and a second film (13), made in a material able to be printed and disposed on said intermediate metallic coating layer (11), wherein each of the layers (110, 210, 310) forming said first film (10) comprises a cyclic olefin copolymer (COC) obtained through copolymerization of ethylene and norbornene and wherein said metallic coating layer (11) has a thickness comprised between about 100 angstrom and 400 angstrom, **characterized in that** said first film (10) is provided with:
- a first (110) of said layers (110, 210, 310) on which said metallic coating layer (11) is deposited and comprising a first mix (A) comprising linear low-density polyethylene (LLDPE) and said cyclic olefin copolymer (COC);
- a second (210) of said layers (110, 210, 310) comprising a second mix (B) comprising low-density polyethylene (LDPE) and said cyclic olefin copolymer (COC); and
- a third (310) of said layers (110, 210, 310) normally disposed inside the packaging and comprising a third mix (C) comprising linear low-density polyethylene (LLDPE), said cyclic olefin copolymer (COC), components with anti-blocking functions and one or more process additives.

2. Two films structure as in claim 1, **characterized in that** said first mix (A) comprises said cyclic olefin copolymer (COC) between 50 % and 100 % in weight.

3. Two films structure as in claim 1 or 2, **characterized in that** said first mix (A) comprises said cyclic olefin copolymer (COC) between about 75 % and 85 % in weight.

4. Two films structure as in claim 1, 2 or 3, **characterized in that** said first layer (110) contains said first mix (A) in an amount comprised between 20 % and 30 % in weight of the total weight of said first film (10).

5. Two films structure as in any claim hereinbefore, **characterized in that** said second mix (B) comprises said cyclic olefin copolymer (COC) between 20 % and 50 % in weight.

6. Two films structure as in any claim hereinbefore, **characterized in that** said second mix (B) comprises said cyclic olefin copolymer (COC) between about 25 % and 35 % in weight.

7. Two films structure as in any claim hereinbefore, **characterized in that** said second layer (210) contains said second mix (B) in an amount comprised between 45 % and 55 % in weight of the total weight of said first film (10).

8. Two films structure as in any claim hereinbefore, **characterized in that** said third mix (C) comprises said cyclic olefin copolymer (COC) between 50 % and 100 % in weight.

9. Two films structure as in any claim hereinbefore, **characterized in that** said third mix (C) comprises said cyclic olefin copolymer (COC) between about 75 % and 85 % in weight.

10. Two films structure as in any claim hereinbefore, **characterized in that** said third layer (310) contains said third mix (C) in an amount comprised between 20 % and 30 % in weight of the total weight of said first film (10).

11. Two films structure as in any claim hereinbefore, **characterized in that** the first film (10) has a thickness comprised between about 10 micron and 100 micron.

12. Two films structure as in any claim hereinbefore, **characterized in that** said metallic coating layer (11) is formed by aluminum.

13. Two films structure as in any claim hereinbefore, **characterized in that** the first film (10) coupled with the metallic coating layer (11) has a permeability to oxygen comprised between about 10 cm³/m² and 20 cm³/m² a day at 23 °C and with 0% relative humidity.

14. Two films structure as in any claim hereinbefore, **characterized in that** the first film (10) coupled with the metallic coating layer (11) has a permeability to water vapor comprised between about 0.05 g/m² and 0.1 g/m² a day at 38 °C and with 90% relative humidity.

15. Two films structure as in any claim hereinbefore, for use as packaging in the food and pharmaceutical sector.

16. Two films structure as in claim 15, **characterized in that** it has a permeability to oxygen comprised between about 0.5 cm³/m² and 8 cm³/m² a day at 23 °C and with 0% relative humidity.

17. Two films structure as in claim 15 or 16, **characterized in that** it has a permeability to water vapor comprised between about 0.05 g/m² and 0.3 g/m² a day at 38 °C and with 90% relative humidity.

18. Two films structure as in any claims hereinbefore, **characterized in that** it comprises a coupling layer (12) that is provided between the metallic coating layer (11) deposited on the first film (10) and the second film (13), in order to couple the second film (13) to the first film (10).

19. Method for producing a two films structure, or "duplex", for producing a packaging product, comprising a first film (10) formed by a plurality of layers (110, 210, 310), at least an intermediate metallic coating layer (11) deposited on an outer of said layers (110, 210, 310) and a second film (13), made in a material able to be printed and disposed on said intermediate metallic coating layer (11), comprising a first step (I) in which an extrusion is performed of a plurality of mixes (A, B, C) each comprising a cyclic olefin copolymer (COC), obtained through copolymerization of ethylene and norbornene, in order to obtain said first film (10) and a crown treatment is performed on at least the outer surface of said first film (10), a second step (II) to metallize at least the outer surface of said first film (10) in order to obtain said metallic coating layer (11) that comprises the performance of a plasma treatment on said first film (10) and a subsequent deposition of metallic vapors (AV) on said first film (10), in order to obtain said metallic coating layer (11) with a thickness comprised between about 100 angstrom and 400 angstrom, **characterized in that** the method provides a third step (III) in which, following the metallization of said second step (II), the coupling of the metallized film with the second film (13) is performed, in order to obtain said two films structure, or "duplex" (20) and **in that**, in said first step (I) for obtaining said first film (10):
- a first (110) of said layers (110, 210, 310) is formed by a first mix (A) comprising linear low-density polyethylene (LLDPE) and said cyclic olefin copolymer (COC);
- a second (210) of said layers (110, 210, 310) is formed by a second mix (B) comprising low-density polyethylene (LDPE) and said cyclic olefin copolymer (COC);
- a third (310) of said layers (110, 210, 310), normally disposed inside the packaging, is formed by a third mix (C) comprising linear low-density polyethylene (LLDPE), said cyclic olefin copolymer (COC), components with anti-blocking functions and one or more process additives;
and wherein in said second step (II) the metallic coating layer (11) is deposited on said first (110) of said layers (110, 210, 310).

20. Method as in claim 19, **characterized in that** the extrusion of said first step (I) is performed by a blow-film machine.

21. Method as in any claim 19 or 20, **characterized in that** said plasma treatment is performed with an amperage comprised between about 4 ampere and 20 ampere, with a difference in potential comprised between about 200 volt and 500 volt, with a gas chosen from a group comprising argon, oxygen, nitrogen, carbon dioxide, ammonia and helium, and with a gas flow comprised between about 300 sccm and 1500 sccm.

## Patentansprüche

1. Doppelfolienstruktur oder "Duplex" zur Herstellung eines Verpackungsprodukts, die aufweist: eine erste Folie (10), die aus mehreren Schichten (110, 210, 310), wenigstens einer metallischen Zwischenüberzugschicht (11), die auf einem Äußeren der Schichten (110, 210, 310) abgeschieden ist, ausgebildet ist, und eine zweite Folie (13), die in einem Material hergestellt ist, das fähig ist, bedruckt zu werden, und auf der metallischen Zwischenüberzugschicht (11) angeordnet ist, wobei jede der Schichten (110, 210, 310), die die erste Folie (10) bilden, ein zyklisches Olefin-Copolymer (COC) aufweist, das durch Copolymerisation von Ethylen und Norbornen gewonnen wird, und wobei die metallische Überzugschicht (11) eine Dicke hat, die zwischen etwa 100 Angström und 400 Angström liegt, **dadurch gekennzeichnet, dass** die erste Folie (10) versehen ist mit:
- einer ersten (110) der Schichten (110, 210, 310), auf der die metallische Überzugschicht (11) abgeschieden ist und die eine erste Mischung (A) aufweist, die lineares Polyethylen niedriger Dichte (LLDPE) und das zyklische Olefin-Copolymer (COC) aufweist;
- einer zweiten (210) der Schichten (110, 210, 310), die eine zweite Mischung (B) aufweist, die Polyethylen niedriger Dichte (LDPE) und das zyklische Olefin-Copolymer (COC) aufweist; und
- einer dritten (310) der Schichten (110, 210, 310), die normalerweise im Inneren der Verpackung angeordnet ist und eine dritte Mischung (C) aufweist, die lineares Polyethylen niedriger Dichte (LLDPE), das zyklische Olefin-Copolymer (COC), Komponenten mit Antiblockfunktionen und ein oder mehrere Prozessadditive aufweist.

2. Doppelfolienstruktur nach Anspruch 1, **dadurch gekennzeichnet, dass** die erste Mischung (A) zwischen 50 Gewichts-% und 100 Gewichts-% des zyklischen Olefin-Copolymers (COC) aufweist.

3. Doppelfolienstruktur nach Anspruch 1 oder 2, **dadurch gekennzeichnet, dass** die erste Mischung (A) zwischen etwa 75 Gewichts-% und 85 Gewichts-% des zyklischen Olefin-Copolymers (COC) aufweist.

4. Doppelfolienstruktur nach Anspruch 1, 2 oder 3, **dadurch gekennzeichnet, dass** die erste Schicht (110) die erste Mischung (A) in einer Menge zwischen 20 Gewichts-% und 30 Gewichts-% des Gesamtgewichts der ersten Folie (10) enthält.

5. Doppelfolienstruktur nach einem der vorhergehenden Ansprüche, **dadurch gekennzeichnet, dass** die zweite Mischung (B) zwischen 20 Gewichts-% und 50 Gewichts-% des zyklischen Olefin-Copolymers (COC) aufweist.

6. Doppelfolienstruktur nach einem der vorhergehenden Ansprüche, **dadurch gekennzeichnet, dass** die zweite Mischung (B) zwischen etwa 25 Gewichts-% und 35 Gewichts-% des zyklischen Olefin-Copolymers (COC) aufweist.

7. Doppelfolienstruktur nach einem der vorhergehenden Ansprüche, **dadurch gekennzeichnet, dass** die zweite Schicht (210) die zweite Mischung (B) in einer Menge zwischen 45 Gewichts-% und 55 Gewichts-% des Gesamtgewichts der ersten Folie (10) enthält.

8. Doppelfolienstruktur nach einem der vorhergehenden Ansprüche, **dadurch gekennzeichnet, dass** die dritte Mischung (C) zwischen 50 Gewichts-% und 100 Gewichts-% des zyklischen Olefin-Copolymers (COC) aufweist.

9. Doppelfolienstruktur nach einem der vorhergehenden Ansprüche, **dadurch gekennzeichnet, dass** die dritte Mischung (C) zwischen etwa 75 Gewichts-% und 85 Gewichts-% des zyklischen Olefin-Copolymers (COC) aufweist.

10. Doppelfolienstruktur nach einem der vorhergehenden Ansprüche, **dadurch gekennzeichnet, dass** die dritte Schicht (310) die dritte Mischung (C) in einer Menge zwischen 20 Gewichts-% und 30 Gewichts-% des Gesamtgewichts der ersten Folie (10) enthält.

11. Doppelfolienstruktur nach einem der vorhergehenden Ansprüche, **dadurch gekennzeichnet, dass** die erste Folie (10) eine Dicke zwischen etwa 10 Mikrometer und 100 Mikrometer hat.

12. Doppelfolienstruktur nach einem der vorhergehenden Ansprüche, **dadurch gekennzeichnet, dass** die metallische Überzugschicht (11) durch Aluminium ausgebildet ist.

13. Doppelfolienstruktur nach einem der vorhergehenden Ansprüche, **dadurch gekennzeichnet, dass** die erste Folie (10), die mit der metallischen Überzugschicht (11) gekoppelt ist, an einem Tag bei 23°C und bei 0% relativer Luftfeuchtigkeit eine Permeabilität für Sauerstoff zwischen etwa 10 cm³/m² und 20 cm³/m² hat.

14. Doppelfolienstruktur nach einem der vorhergehenden Ansprüche, **dadurch gekennzeichnet, dass** die erste Folie (10), die mit der metallischen Überzugschicht (11) gekoppelt ist, an einem Tag bei 38°C und bei 90% relativer Luftfeuchtigkeit eine Permeabilität für Wasserdampf zwischen etwa 0,05 g/m² und 0,1 g/m² hat.

15. Doppelfolienstruktur nach einem der vorhergehenden Ansprüche für die Verwendung als Verpackung im Lebensmittel- und Arzneimittelsektor.

16. Doppelfolienstruktur nach Anspruch 15, **dadurch gekennzeichnet, dass** sie an einem Tag bei 23°C und bei 0% relativer Luftfeuchtigkeit eine Permeabilität für Sauerstoff zwischen etwa 0,5 cm³/m² und 8 cm³/m² hat.

17. Doppelfolienstruktur nach Anspruch 15 oder 16, **dadurch gekennzeichnet, dass** sie an einem Tag bei 38°C und bei 90% relativer Luftfeuchtigkeit eine Permeabilität für Wasserdampf zwischen etwa 0,05 g/m² und 0,3 g/m² hat.

18. Doppelfolienstruktur nach einem der vorhergehenden Ansprüche, **dadurch gekennzeichnet, dass** sie eine Kopplungsschicht (12) aufweist, die zwischen der metallischen Überzugschicht (11), die auf der ersten Folie (10) abgeschieden ist, und der zweiten Folie (13) bereitgestellt ist, um die zweite Folie (13) mit der ersten Folie (10) zu koppeln.

19. Verfahren zur Herstellung einer Doppelfolienstruktur oder "Duplex" zur Herstellung eines Verpackungsprodukts, die aufweist: eine erste Folie (10), die aus mehreren Schichten (110, 210, 310), wenigstens einer metallischen Zwischenüberzugschicht (11), die auf einem Äußeren der Schichten (110, 210, 310) abgeschieden ist, ausgebildet ist, und eine zweite Folie (13), die in einem Material hergestellt ist, das fähig ist, bedruckt zu werden, und auf der metallischen Zwischenüberzugschicht (11) angeordnet ist, das aufweist: einen ersten Schritt (I), in dem eine Extrusion mehrerer Mischungen (A, B, C) durchgeführt wird, von denen jede ein zyklisches Olefin-Copolymer (COC) aufweist, das durch Copolymerisation von Ethylen und Norbornen gewonnen wird, um die erste Folie (10) zu gewinnen, und eine Coroanavorbehandlung wenigstens auf der äußeren Oberfläche der ersten Folie (10) durchgeführt wird, einen zweiten Schritt (II), um die wenigstens eine äußere Oberfläche der ersten Folie (10) zu metallisieren, um die metallische Überzugsschicht (11) zu gewinnen, der die Durchführung einer Plasmabehandlung auf der ersten Folie (10) und einer anschließenden Abscheidung von metallischen Dämpfen (AV) auf der ersten Folie (10) aufweist, um die metallische Überzugschicht (11) mit einer Dicke zu gewinnen, die zwischen etwa 100 Angström und 400 Angström liegt, **dadurch gekennzeichnet, dass** das Verfahren einen dritten Schritt (III) bereitstellt, in dem anschließend an die Metallisierung des zweiten Schritts (II) die Kopplung der metallisierten Folie mit der zweiten Folie (13) durchgeführt wird, um die Doppelfolienstruktur oder "Duplex" (20) zu gewinnen, und dass in dem ersten Schritt (I) zum Gewinnen der ersten Folie (10):
- eine erste (110) der Schichten (110, 210, 310) durch eine erste Mischung (A), die lineares Polyethylen niedriger Dichte (LLDPE) und das zyklische Olefin-Copolymer (COC) aufweist, ausgebildet wird;
- eine zweite (210) der Schichten (110, 210, 310) durch eine zweite Mischung (B), die Polyethylen niedriger Dichte (LDPE) und das zyklische Olefin-Copolymer (COC) aufweist, ausgebildet wird;
- eine dritte (310) der Schichten (110, 210, 310), die normalerweise im Inneren der Verpackung angeordnet ist, durch eine dritte Mischung (C), die lineares Polyethylen niedriger Dichte (LLDPE), das zyklische Olefin-Copolymer (COC), Komponenten mit Antiblockfunktionen und ein oder mehreren Prozessadditiven aufweist, ausgebildet wird;
und wobei in dem zweiten Schritt (II) die metallische Überzugschicht (11) auf der ersten (110) der Schichten (110, 210, 310) abgeschieden wird.

20. Verfahren nach Anspruch 19, **dadurch gekennzeichnet, dass** die Extrusion des ersten Schritts (I) durch eine Blasfolienvorrichtung durchgeführt wird.

21. Verfahren nach Anspruch 19 oder 20, **dadurch gekennzeichnet, dass** die Plasmabehandlung mit einer Stromstärke zwischen etwa 4 Ampere und 20 Ampere mit einer Potentialdifferenz zwischen etwa 200 Volt und 500 Volt mit einem Gas, das aus einer Gruppe ausgewählt wird, die Argon, Sauerstoff, Stickstoff, Kohlendioxid, Ammoniak und Helium aufweist, und mit einer Gasströmung zwischen etwa 300 sccm und 1500 sccm durchgeführt wird.

## Revendications

1. Structure à deux films, ou "duplex", pour la fabrication d'un produit d'emballage, comprenant un premier film (10) constitué d'une pluralité de couches (110, 210, 310), au moins une couche de revêtement métallique intermédiaire (11) déposée sur une surface extérieure desdites couches (110, 210, 310) et un second film (13), constitué d'un matériau imprimable et disposé sur ladite couche de revêtement métallique intermédiaire (11), dans laquelle chacune des couches (110, 210, 310) formant ledit premier film (10) comprend un copolymère d'oléfine cyclique (COC) obtenu par copolymérisation de l'éthylène et du norbornène et dans laquelle ladite couche de revêtement métallique (11) a une épaisseur comprise entre environ 100 angström et 400 angström, **caractérisée en ce que** ledit premier film (10) est pourvu de :
- une première (110) desdites couches (110, 210, 310) sur laquelle ladite couche de revêtement métallique (11) est déposée et comprenant un premier mélange (A) comprenant un polyéthylène à basse densité linéaire (PEBDL) et ledit copolymère d'oléfine cyclique (COC) ;
- une deuxième (210) desdites couches (110, 210, 310) comprenant un deuxième mélange (B) comprenant un polyéthylène à basse densité (PEBD) et ledit copolymère d'oléfine cyclique (COC) ; et
- une troisième (310) desdites couches (110, 210, 310) normalement disposée à l'intérieur de l'emballage et comprenant un troisième mélange (C) comprenant un polyéthylène à basse densité linéaire (PEBDL), ledit copolymère d'oléfine cyclique (COC), composantes avec des fonctions anti-bloquantes et un ou plusieurs agents technologiques.

2. Structure à deux films selon la revendication 1, **caractérisée en ce que** ledit premier mélange (A) comprend ledit copolymère d'oléfine cyclique (COC) en quantité comprise entre 50% et 100% en poids.

3. Structure à deux films selon la revendication 1 ou 2, **caractérisée en ce que** ledit premier mélange (A) comprend ledit copolymère d'oléfine cyclique (COC) en quantité comprise entre environ 75 % et 85 % en poids.

4. Structure à deux films selon la revendication 1, 2 ou 3, **caractérisée en ce que** ladite première couche (110) contient ledit premier mélange (A) en quantité comprise entre environ 20% et 30% en poids par rapport au poids total dudit premier film (10).

5. Structure à deux films selon n'importe laquelle des revendications précédentes, **caractérisée en ce que** ledit deuxième mélange (B) comprend ledit copolymère d'oléfine cyclique (COC) en quantité comprise entre 20 % et 50 % en poids.

6. Structure à deux films selon n'importe laquelle des revendications précédentes, **caractérisée en ce que** ledit deuxième mélange (B) comprend ledit copolymère d'oléfine cyclique (COC) en quantité comprise entre environ 25 % et 35 % en poids.

7. Structure à deux films selon n'importe laquelle des revendications précédentes, **caractérisée en ce que** ladite deuxième couche (210) contient ledit deuxième mélange (B) en quantité comprise entre 45 % et 55 % en poids par rapport au poids total dudit premier film (10).

8. Structure à deux films selon n'importe laquelle des revendications précédentes, **caractérisée en ce que** ledit troisième mélange (C) comprend ledit copolymère d'oléfine cyclique (COC) en quantité comprise entre 50 % et 100 % en poids.

9. Structure à deux films selon n'importe laquelle des revendications précédentes, **caractérisée en ce que** ledit troisième mélange (C) comprend ledit copolymère d'oléfine cyclique (COC) en quantité comprise entre environ 75 % et 85 % en poids.

10. Structure à deux films selon n'importe laquelle des revendications précédentes, **caractérisée en ce que** ladite troisième couche (310) contient ledit troisième mélange (C) en quantité comprise entre 20 % et 30 % en poids par rapport au poids total dudit premier film (10).

11. Structure à deux films selon n'importe laquelle des revendications précédentes, **caractérisée en ce que** ledit premier film a une épaisseur comprise entre environ 10 micron et 100 micron.

12. Structure à deux films selon n'importe laquelle des revendications précédentes, **caractérisée en ce que** ladite couche de revêtement métallique (11) est constituée d'aluminium.

13. Structure à deux films selon n'importe laquelle des revendications précédentes, **caractérisée en ce que** ledit premier film (10) accouplé avec la couche de revêtement métallique (11) présente une perméabilité à l'oxygène comprise entre 10 cm³/m² et 20 cm³/m par jour à 23 °C, avec 0 % d'humidité relative.

14. Structure à deux films selon n'importe laquelle des revendications précédentes, **caractérisée en ce que** ledit premier film (10) accouplé avec la couche de revêtement métallique (11) présente une perméabilité à la vapeur d'eau comprise entre environ 0,05 g/m² et 0,1 g/m² par jour à 38 °C, avec 90% d'humidité relative.

15. Structure à deux films selon n'importe laquelle des revendications précédentes, destinée à un emploi d'emballage dans l'industrie et alimentaire et pharmaceutique.

16. Structure à deux films selon la revendication 15, **caractérisée en ce qu'**elle présente une perméabilité à l'oxygène comprise entre 0,5 cm³/m² et 8 cm³/m² par jour à 23 °C, avec 0 % d'humidité relative.

17. Structure à deux films selon la revendication 15 ou 16, **caractérisée en ce qu'**elle présente une perméabilité à la vapeur d'eau comprise entre 0,05 g/m² et 0,3 g/m² par jour à 38 °C, avec 90% d'humidité relative.

18. Structure à deux films selon n'importe laquelle des revendications précédentes, **caractérisée en ce qu'**elle comprend une couche d'accouplement (12), prévue entre la couche de revêtement métallique (11) déposée sur le premier film (10) et le second film (13), pour accoupler le second film (13) au premier film (10).

19. Procédé pour fabriquer une structure à deux films, ou "duplex", pour la fabrication d'un produit d'emballage, comprenant un premier film (10) constitué d'une pluralité de couches (110, 210, 310), au moins une couche de revêtement métallique intermédiaire (11) déposée sur une surface extérieure desdites couches (110, 210, 310) et un second film (13), constitué d'un matériau imprimable et disposé sur ladite couche de revêtement métallique intermédiaire (11), comportant une première étape (I) d'extrusion d'une pluralité de mélanges (A, B, C), chacun comprenant un copolymère d'oléfine cyclique (COC) obtenu par copolymérisation de l'éthylène et du norbornène pour former ledit premier film (10) et de traitement corona sur au moins la surface extérieure dudit premier film (10), une deuxième étape (II) de métallisation d'au moins la surface extérieure dudit premier film (10) pour obtenir ladite couche de revêtement métallique (11), comportant un traitement plasma sur ledit premier film (10) et en suite un dépôt métallique en phase vapeur (AV) sur ledit premier film (10) pour obtenir ladite couche de revêtement métallique (11), avec une épaisseur comprise entre environ 100 angström et 400 angström, **caractérisée en ce que** le procédé comporte une troisième étape (III) pendant laquelle, après la métallisation de ladite deuxième étape (II), le film métallisé est accouplé au second film (13), pour obtenir ladite structure à deux films, ou "duplex" (20), et **en ce que**, pendant ladite première étape (I) pour obtenir ledit premier film (10) :
- une première (110) desdites couches (110, 210, 310) est formée par un premier mélange (A) comprenant un polyéthylène à basse densité linéaire (PEBDL) et ledit copolymère d'oléfine cyclique (COC) ;
- une deuxième (210) desdites couches (110, 210, 310) est formée par un deuxième mélange (B) comprenant un polyéthylène à basse densité (PEBD) et ledit copolymère d'oléfine cyclique (COC) ;
- une troisième (310) desdites couches (110, 210, 310) normalement disposée à l'intérieur de l'emballage est formée par un troisième mélange (C) comprenant un polyéthylène à basse densité linéaire (PEBDL), ledit copolymère d'oléfine cyclique (COC), composantes avec des fonctions anti-bloquantes et un ou plusieurs agents technologiques ; et **en ce que**, pendant ladite deuxième étape (II) la couche de revêtement métallique (11) est déposée sur ladite première (110) desdites couches (110, 210, 310).

20. Procédé selon la revendication 19, **caractérisé en ce que** l'extrusion ayant lieu pendant ladite première étape (I) est effectué par une machine de soufflage de film.

21. Procédé selon n'importe laquelle des revendications 19 et 20, **caractérisé en ce que** ledit traitement plasma est effectué avec un ampérage compris entre environ 4 ampères et 20 ampères, avec une différence de potentiel comprise entre environ 200 Volt et 500 Volt, avec un gaz choisi dans un groupe comprenant argon, oxygène, azote, anhydride carbonique, ammoniac et hélium, et avec un flux de gaz compris entre 300 sccm et 1500 sccm.
